# EUROPÄISCHE PATENTSCHRIFT

(11) **EP 4 627 379 B1**
(45) Veröffentlichungstag und Bekanntmachung des Hinweises auf die Patenterteilung: **28.10.2026**
(21) Anmeldenummer: 25707321.3
(22) Anmeldetag: 14.02.2025
(51) Int. Cl.: G01S 7/539, B63G 7/02, G01S 15/04, G01S 15/06, G01S 7/41, G01S 7/48

(54) **DATENVERARBEITUNGSEINHEIT ZUR PRÄDIKTION EINER POSITION VON EINER SEEMINE**
DATA PROCESSING UNIT FOR PREDICTING A POSITION OF A SEA MINE
UNITÉ DE TRAITEMENT DE DONNÉES POUR PRÉDIRE UNE POSITION D'UNE MINE MARINE

(30) Priorität: 19.02.2024 DE 102024104566
(43) Veröffentlichungstag der Anmeldung: 08.10.2025
(73) Patentinhaber: TKMS ATLAS ELEKTRONIK GmbH, 28309 Bremen (DE); thyssenkrupp AG, 45143 Essen (DE)
(72) Erfinder: MÜLLER, Rolf, 28357 Bremen (DE)
(74) Vertreter: thyssenkrupp Intellectual Property GmbH
(86) Internationale Anmeldenummer: PCT/EP2025/054129
(87) Internationale Veröffentlichungsnummer: WO 2025/176583

(56) Entgegenhaltungen:
- CN-A- 117 454 680
- JP-A- 2008 100 591
- KR-A- 20110 008 668
- LUO HONGCHUAN ET AL: "Complete Coverage Path Planning of UUV for Marine Mine Countermeasure Using Grid Division and Spanning Tree", 2019 CHINESE CONTROL AND DECISION CONFERENCE (CCDC), IEEE, 3 June 2019 (2019-06-03), pages 5016 - 5021, XP033614758, [retrieved on 20190910], DOI: 10.1109/CCDC.2019.8832742

## Beschreibung

Die Erfindung bezieht sich auf das Auffinden von Seeminen.

Seeminen werden von entsprechenden Minenjagdbooten mit einem oder mehreren für die Minenjagd optimieren Sensoren durchgeführt. Je nach Detektionsreichweite der Sensoren und der Größe des Suchgebiets fährt das Minenjagdboot das Suchgebiet mehrfach, insbesondere in Schlangenlinien, ab. Als Sensoren wird üblicherweise zumindest ein Sonar mit einer Mehrzahl von Wasserschallwandlern verwendet. Die Sensoren sind jedoch nicht unfehlbar, so dass Minen übersehen werden können. Insbesondere ist es schwierig, im Boden eingesunkene Minen zu detektieren. Eine nicht detektierte Seemine bedeutet jedoch eine erhebliche Gefahr für die nachfolgenden Schiffe, die das Seegebiet passieren sollen.

LUO HONGCHUAN ET AL: "Complete Coverage Path Planning of UUV for Marine Mine Countermeasure Using Grid Division and Spanning Tree", 2019 CHINESE CONTROL AND DECISION CONFERENCE (CCDC), IEEE, 3. Juni 2019 (2019-06-03), Seiten 5016-5021, XP033614758, DOI: 10.1109/CCDC.2019.8832742 offenbart eine Methode zur Erzeugung eines Pfades welcher von einem Wasserfahrzeug abgefahren werden kann, um Seeminen zu detektieren.

JP2008100591A offenbart ein Suchbereichs-Anzeigesystem für Minenräumoperationen, bei dem aus Karten-, Detektions- und Suchergebnisdaten Wahrscheinlichkeitsverteilungen berechnet und zusammen mit einem Suchplan auf einer Seekarte angezeigt werden.

KR 2011 0008668 A offenbart ein Wasserfahrzeug, welches Seeminen detektieren kann und das gefundene Seeminen auf einer Karte eingetragen werden.

CN 117 454 680 A offenbart ein Verfahren, um einen optimalen Suchpfad eines Wasserfahrzeugs zu ermitteln.

Die Aufgabe der vorliegenden Erfindung besteht deshalb darin, ein verbessertes Konzept für das Auffinden von Seeminen zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen eine Datenverarbeitungseinheit zur Prädiktion, d.h. Vorhersage, einer Position von einer Seemine in einem Suchgebiet. Die Datenverarbeitungseinheit ist ausgebildet, mittels eines mit maschinellem Lernen trainierten Modells basierend auf bekannten Positionen von Seeminen in dem Suchgebiet zu überprüfen, ob es weitere Positionen in dem Suchgebiet gibt, an denen mit hoher Wahrscheinlichkeit eine Seemine liegt. Das Modell ist ein computertrainiertes Modell, bevorzugt eine künstliche Intelligenz. Prinzipiell können alle Algorithmen zur Erstellung des Modells verwenden werden, die mittels maschinellem Lernen trainiert werden können. Beispiele für solche Algorithmen sind ein künstliches neuronales Netz, ein Hidden Markov Modell, eine lineare Regression, ein Bayes Klassifikator, eine Support Vektor Maschine, etc.

Vorzugsweise kann die Prädiktion der Position der Seemine(n) mittels einer künstlichen Intelligenz vorgenommen werden. Die künstliche Intelligenz umfasst das Modell. Ein Modell beschreibt einen trainierten Algorithmus. Als Algorithmus eignen sich die meisten gängigen bekannten Algorithmen, insbesondere künstliche neuronale Netze, bevorzugt Deep-Learning Ansätze wie z.B. auf Transformertechnologie beruhende künstliche neuronale Netze und/oder faltende (convolutional) künstliche neuronale Netze. D.h., bevorzugt wird das Modell als künstliches neuronales Netz ausgeführt. Das künstliche neuronale Netz kann beispielsweise auf der Transformertechnologie beruhen und/oder ein faltendes (convolutional) künstliches neuronales Netz sein bzw. umfassen.

Insbesondere hat es sich herausgestellt, dass keine speziellen Algorithmen verwendet werden brauchen, um das Modell zu erstellen. Es ist ausreichend, zur kommerziellen Verwendung angebotene Algorithmen mit entsprechenden Daten zu trainieren. Solche Algorithmen werden auch als COTS (Components-Off-The-Shelf) bezeichnet. Es hat sich herausgestellt, dass die Struktur, also bei künstlichen neuronalen Netzen beispielsweise die Anzahl der Neuronen oder die Zahl der Schichten, irrelevant für das Trainieren des Modells ist, solange ein Mindestgrad an Komplexität erreicht ist. Insbesondere eignen sich solche Modelle, die auch in öffentlichen Benchmarks gut abschneiden. Beispielhaft seien als Benchmarks der "COCO dev-test" oder der "COCO val2017" genannt. Beispielhafte seien Modelle genannt, die auf dem DINO (DETR with Improved deNoising anchOr box) Algorithmus oder dem YOLO (You Only Look Once) Algorithmus basieren.

In "Tianhe Ren, Jianwei Yang, Shilong Liu, Ailing Zeng, Feng Li, Hao Zhang, Hongyang Li, Zhaoyang Zeng, Lei Zhang. A Strong and Reproducible Object Detector with Only Public Datasets. arXiv:2304.13027 [cs.CV]. (https://doi.org/10.48550/arXiv.2304.13027)" und "Hao Zhang, Feng Li, Shilong Liu, Lei Zhang, Hang Su, Jun Zhu, Lionel M. Ni, Heung-Yeung Shum. DINO: DETR with Improved DeNoising Anchor Boxes for End-to-End Object Detection. arXiv:2203.03605 [cs.CV]. (https://doi.org/10.48550/arXiv.2203.03605)" sind Beispiele für die Modelle offenbart.

Diese Algorithmen eigenen sich insbesondere zur Analyse von Bilddaten. Das heißt, zum Training können Bilder, beispielsweise Seekarten, verwerndet werden, in denen die Positionen von bekannten, insbesondere bereits geräumten, Seeminen eingetragen sind. Vorteilhafterweise sind die Bilder auf den gleichen Maßstab skaliert. D.h., der gleiche tatsächliche Abstand zwischen zwei Seeminen entspricht dem gleichen Abstand der beiden Seeminen in dem Bild.

Trainiert mit einer Vielzahl solcher Bilder ist das Modell dann in der Lage, Muster in den Bildern zu erkennen. Dies erfolgt in der Regel mittels unüberwachtem Lernen. Das trainierte Modell kann dann, wenn die erste(n) Seeminen in einem neuen Minensuchgebiet gefunden worden sind, Positionen von weiteren Seeminen vorhersagen.

Es ist jedoch auch möglich, vorzugsweise mit anderen Algorithmen, beispielsweise auch auf den Rohdaten der Positionen, also beispielsweise den GPS-Daten, ein Modell zu trainieren.

Die Anmelderin als Anbieterin von Minenjagdbooten und Minenjagdsensoren, insbesondere Minenjagdsonaren, hat Zugriff auf eine Vielzahl von Daten von Seeminenräumungen aus verschiedenen Seegebieten. Basierend auf den Minenfunden pro Seegebiet kann mittels maschinellem Lernen, üblicherweise unter Verwendung von drei Datensätzen, einem Trainingsdatensatz, einem Testdatensatz und einem Validierungsdatensatz, das Modell trainiert werden. Die Seeminenfunde eines Seegebiets können in einem Datensatz abgelegt sein. D.h., das Modell kann mittels Datensätzen von bekannten Positionen (Fundstellen) von Seeminen bereits geräumter Suchgebiete trainiert werden. Wie bereits beschrieben können die Datensätze aus Bildern mit den Positionen der Seeminen bestehen oder diese aufweisen, insbesondere einem Bild pro geräumtem Seegebiet.

Da das Ausbringen der Minen nicht zufällig, sondern basierend auf einem Aussetzalgorithmus erfolgt, um ein möglichst großes Seegebiet mit möglichst wenig Ressourceneinsatz (Mineneinsatz) zu sperren, erfolgt das Aussetzen nicht zufällig. Somit kann das Modell auf die resultierenden Absetzmuster trainiert werden.

Idee ist es, die Minenjagd unter Zuhilfenahme der immer fortschreitenden Technik der computerimplementierten Modellierung von Problemen, insbesondere durch maschinelles Lernen, beispielsweise eine künstliche Intelligenz, zu verbessern. Üblicherweise wird das Modell nicht die gesamte Suche übernehmen. Dies ist alleine deshalb nicht möglich, da das Modell einige Fundstellen, d.h. bekannte Positionen, von Seeminen benötigt, um weitere Fundstellen vorhersagen zu können. Aber das Modell kann die derzeitige Minenjagd unterstützen, beispielsweise indem während oder nach dem konventionellen Absuchen des Suchgebiets mittels eines Minenjagdbootes durch das Modell überprüft wird, ob alle Minen gefunden wurden oder ob Lücken vorhanden sind. Ferner kann das Modell eine unklare, d.h. nicht eindeutige, Detektion einer Mine durch die Sensoren verifizieren, um festzustellen, ob es sich tatsächlich um einen Minenfund oder ein anderes Objekt bzw. ein Artefakt handelt.

Ferner ist ein Verfahren zum Auffinden von Seeminen in einem Suchgebiet offenbart. Das Verfahren umfasst das Absuchen des Suchgebiets mittels eines Minensuchsensors, insbesondere eines Sonars. Hierfür können wie oben beschrieben die Minenjagdboote eingesetzt werden. Ferner umfasst das Verfahren das Verifizieren einer mittels des Minensuchsensors aufgefundenen, möglichen Position einer Seemine mittels der Datenverarbeitungseinheit. Das heißt, dass das Verifizieren der möglichen Position der Seemine durch Eingabe der möglichen Position in die Datenverarbeitungseinheit erfolgt, wobei die Datenverarbeitungseinheit die mögliche Position der Seemine automatisch verifiziert. In anderen Worten erhält das Modell die mögliche Position und verifiziert diese intern. Somit kann die Wahrscheinlichkeit von Fehldetektionen verringert werden.

Alternativ erfolgt das Verifizieren der möglichen Position der Seemine durch Vergleich der möglichen Position mit einer oder mehreren durch die Datenverarbeitungseinheit bereitgestellten Positionen in dem Suchgebiet, an denen mit hoher Wahrscheinlichkeit eine Seemine liegt. D.h., das Modell kann seine potentiellen Fundstellen ausgeben und die mögliche Position wird manuell oder mittels eines weiteren Computerprogramms mit allen potentiellen Fundstellen verglichen, um die mögliche Position zu verifizieren. Somit kann die Wahrscheinlichkeit von Fehldetektionen verringert werden.

Analog zu der Datenverarbeitungseinheit ist ein Computerprogramm offenbart, umfassend Befehle, die bei der Ausführung auf einem Computer diesen veranlassen, mittels eines Modells basierend auf bekannten Positionen von Seeminen in dem Suchgebiet zu überprüfen, ob es weitere Positionen in dem Suchgebiet gibt, an denen mit hoher Wahrscheinlichkeit eine Seemine liegt.

Bevorzugte Ausführungsbeispiele der vorliegenden Erfindung werden nachfolgend Bezug nehmend auf die beiliegenden Zeichnungen erläutert. Es zeigt:

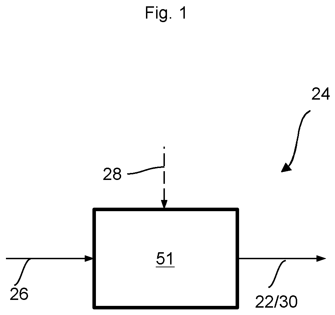

Fig. 1: ein schematisches Blockschaltbild einer Datenverarbeitungseinheit zur Prädiktion einer Position von einer Seemine in einem Suchgebiet.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Fig. 1 zeigt ein schematisches Blockschaltbild einer Datenverarbeitungseinheit 20 zur Prädiktion einer Position 22 von einer Seemine in einem Suchgebiet. Die Datenverarbeitungseinheit 20 kann mittels eines Modells 24 basierend auf bekannten Positionen 26 von Seeminen in dem Suchgebiet überprüfen, ob es weitere Positionen 22 in dem Suchgebiet gibt, an denen mit hoher Wahrscheinlichkeit eine Seemine liegt.

Optional kann die Datenverarbeitungseinheit 20 eine Eingabeschnittstelle zur Eingabe einer durch die Sensoren, insbesondere das Sonar, aufgefundenen möglichen Position 28 in die Datenverarbeitungseinheit aufweisen. Die mögliche Position kann durch das Modell 24 verifiziert werden, so dass als Ausgabe der Datenverarbeitungseinheit anstelle der Position 22 der Seemine das Verifizierungsergebnis 30 ausgegeben wird.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste:

- 20: Datenverarbeitungseinheit
- 22: Position einer Seemine, ermittelt durch das Modell
- 24: Modell
- 26: bekannte Positionen von Seeminen in dem Suchgebiet (bisherige Fundstellen)
- 28: mögliche, unklare Position einer Seemine, ermittelt durch einen Sensor
- 30: Verifizierungsergebnis der unklaren Position

## Patentansprüche

1. Datenverarbeitungseinheit (20) zur Prädiktion einer Position (22) von einer Seemine in einem Suchgebiet, wobei die Datenverarbeitungseinheit (20) ausgebildet ist, mittels eines mit maschinellem Lernen erzeugten Modell (24) basierend auf bekannten Positionen (26) von Seeminen in dem Suchgebiet zu überprüfen, ob es eine oder mehrere weitere Positionen (22) in dem Suchgebiet gibt, an denen mit hoher Wahrscheinlichkeit eine Seemine liegt.

2. Datenverarbeitungseinheit (20) gemäß Anspruch 1, wobei das Modell (24) mittels Datensätzen von bekannten Positionen (22) von Seeminen bereits geräumter Suchgebiete trainiert ist.

3. Datenverarbeitungseinheit (20) gemäß Anspruch 2, wobei die Datensätze Positionen, insbesondere GPS-Daten, der bereits gefundenen Seeminen umfassen.

4. Datenverarbeitungseinheit (20) gemäß Anspruch 2 oder Anspruch 3, wobei die Datensätze Bilder mit den Positionen der Seeminen umfassen.

5. Datenverarbeitungseinheit (20) gemäß einem der vorherigen Ansprüche, wobei das Modell eine künstliche Intelligenz ist.

6. Verfahren zum Auffinden von Seeminen in einem Suchgebiet mit folgenden Schritten:
- Absuchen des Suchgebiets mit einem Minensuchsensor, insbesondere einem Sonar;
- Verifizieren einer mittels des Minensuchsensors aufgefundenen, möglichen Position (28) einer Seemine mittels der Datenverarbeitungseinheit (20) gemäß einer der vorherigen Ansprüche.

7. Verfahren gemäß Anspruch 6, wobei das Verifizieren der möglichen Position der Seemine durch Eingabe der möglichen Position (28) in die Datenverarbeitungseinheit (20) erfolgt und wobei die Datenverarbeitungseinheit (20) die mögliche Position (28) der Seemine automatisch verifiziert.

8. Verfahren gemäß Anspruch 6 oder 7, wobei das Verifizieren der möglichen Position (28) der Seemine durch Vergleich der möglichen Position mit einer oder mehreren durch die Datenverarbeitungseinheit bereitgestellten Positionen (22) in dem Suchgebiet, an denen mit hoher Wahrscheinlichkeit eine Seemine liegt, erfolgt.

9. Computerprogramm, umfassend Befehle, die bei der Ausführung auf einem Computer diesen veranlassen, mittels eines mit maschinellem Lernen erzeugten Modells (24) basierend auf bekannten Positionen (26) von Seeminen in einem Suchgebiet zu überprüfen, ob es weitere Positionen (22) in dem Suchgebiet gibt, an denen mit hoher Wahrscheinlichkeit eine Seemine liegt.

## Claims

1. Data processing unit (20) for predicting a position (22) of a sea mine in a search area, wherein the data processing unit (20) is designed to check, by means of a model (24) produced with machine learning based on known positions (26) of sea mines in the search area, whether there are one or more further positions (22) in the search area at which a sea mine is highly likely to be located.

2. Data processing unit (20) according to Claim 1, wherein the model (24) is trained by means of data sets of known positions (22) of sea mines of search areas already cleared.

3. Data processing unit (20) according to Claim 2, wherein the data sets comprise positions, in particular GPS data, of the sea mines already found.

4. Data processing unit (20) according to Claim 2 or Claim 3, wherein the data sets comprise images with the positions of the sea mines.

5. Data processing unit (20) according to any one of the preceding claims, wherein the model is an artificial intelligence system.

6. Method for locating see mines in a search area, having the following steps:
- searching the search area with a mine seeking sensor, in particular a sonar;
- verifying a possible position (28) of a sea mine located by means of the mine seeking sensor by means of the data processing unit (20) according to any one of the preceding claims.

7. Method according to Claim 6, wherein the possible position of the sea mine is verified by entering the possible position (28) into the data processing unit (20) and wherein the data processing unit (20) automatically verifies the possible position (28) of the sea mine.

8. Method according to Claim 6 or 7, wherein the possible position (28) of the sea mine is verified by comparing the possible position with one or more positions provided by the data processing unit (22) in the search area, at which a sea mine is highly likely to be located.

9. Computer program, comprising commands which, when executed on a computer, cause said computer to check, by means of a model (24) produced by machine learning based on known positions (26) of sea mines in a search area, whether there are further positions (22) in the search area at which a sea mine is highly likely to be located.

## Revendications

1. Unité de traitement de données (20) destinée à prédire une position (22) d'une mine marine dans une zone de recherche, dans laquelle l'unité de traitement de données (20) est conçue pour vérifier, à l'aide d'un modèle (24) généré par apprentissage automatique sur la base de positions connues (26) de mines marines dans la zone de recherche, s'il existe une ou plusieurs autres positions (22) dans la zone de recherche où une mine marine est très susceptible de se trouver.

2. Unité de traitement de données (20) selon la revendication 1, dans laquelle le modèle (24) est entraîné à l'aide d'ensembles de données de positions connues (22) de mines marines provenant de zones de recherche déjà déminées.

3. Unité de traitement de données (20) selon la revendication 2, dans laquelle les ensembles de données comprennent des positions, en particulier des données GPS, des mines marines déjà détectées.

4. Unité de traitement de données (20) selon la revendication 2 ou la revendication 3, dans laquelle les ensembles de données comprennent des images indiquant les positions des mines marines.

5. Unité de traitement de données (20) selon l'une quelconque des revendications précédentes, dans laquelle le modèle est un système d'intelligence artificielle.

6. Procédé de localisation de mines marines dans une zone de recherche, comprenant les étapes suivantes :
- balayer la zone de recherche à l'aide d'un capteur de détection de mines, en particulier un sonar ;
- la vérification d'une position possible (28) d'une mine marine localisée au moyen du capteur de détection de mines à l'aide de l'unité de traitement de données (20) selon l'une quelconque des revendications précédentes.

7. Procédé selon la revendication 6, dans lequel la position possible de la mine marine est vérifiée en saisissant la position possible (28) dans l'unité de traitement de données (20) et dans lequel l'unité de traitement de données (20) vérifie automatiquement la position possible (28) de la mine marine.

8. Procédé selon la revendication 6 ou 7, dans lequel la position possible (28) de la mine marine est vérifiée en comparant ladite position possible à une ou plusieurs positions fournies par l'unité de traitement de données (22) dans la zone de recherche, auxquelles une mine marine est très susceptible de se trouver.

9. Programme informatique, comprenant des instructions qui, lorsqu'elles sont exécutées sur un ordinateur, amènent ledit ordinateur à vérifier, à l'aide d'un modèle (24) généré par apprentissage automatique sur la base de positions connues (26) de mines marines dans une zone de recherche, s'il existe d'autres positions (22) dans la zone de recherche où une mine marine est très susceptible de se trouver.
